# EUROPÄISCHE PATENTANMELDUNG

(11) **EP 1 903 247 A2**
(43) Veröffentlichungstag der Anmeldung: **26.03.2008**
(21) Anmeldenummer: 07017185.5
(22) Anmeldetag: 03.09.2007
(51) Int. Cl.: F16D 65/12

(54) **Bremsscheibe für eine Fahrzeug-Scheibenbremse**

(30) Priorität: 19.09.2006 DE 102006044577
(71) Anmelder: BPW Bergische Achsen KG, 51674 Wiehl (DE)
(72) Erfinder: Abt, Christian, 51643 Gummersbach (DE); Biegale, Achim, 51588 Nümbrecht (DE); Ebert, Jörg, Dr., 50858 Köln (DE); Schmidt, Hartmut, 51588 Nünbrecht (DE)
(74) Vertreter: Christophersen & Partner

(57) **Zusammenfassung**

Vorgeschlagen wird eine Bremsscheibe für eine Fahrzeug-Scheibenbremse mit einem Bremsring (1) mit zwei Reibflächen (2A, 2B) und einem Bremsscheibentopf (4) bestehend aus einem sich axial erstreckenden Abschnitt (4A) und einem radialen Flansch (12). Der Flansch (12) ist mit Öffnungen (13) zum Hindurchführen von Verschraubungen mit der Radnabe (45) des Fahrzeuges versehen. Mit dem Ziel einer Verringerung der durch Wärmeleitung hervorgerufenen Erwärmung der Radnabe (45) wird vorgeschlagen, dass der Flansch (12) in Umfangsrichtung segmentiert ist. Erste Segmentbereiche (51) wechseln sich mit zweiten Segmentbereichen (52) ab, wobei die Materialdicke (D) in beiden Segmentbereichen gleich ist. Die zweiten Segmentbereiche (52) sind axial zurückversetzt gegenüber jener Ebene (E1), in der sich die die Öffnungen (13) aufweisenden, ersten Segmentbereiche (51) befinden.

## Beschreibung

Die Erfindung betrifft eine Bremsscheibe für eine Fahrzeug-Scheibenbremse mit einem zwei Reibflächen aufweisenden Bremsring und einem den Bremsring mit der Radnabe des Fahrzeuges verbindenden Bremsscheibentopf bestehend zumindest aus einem sich axial erstreckenden Abschnitt und einem radialen Flansch, welcher mit Öffnungen zum Hindurchführen von Verschraubungen mit der Radnabe versehen ist.

Derartige Bremsscheiben zur Verwendung in Fahrzeug-Scheibenbremsen sind z. B. aus den Druckschriften DE 43 32 951 A1, DE 44 18 889 A1, EP 0 849 485 B1 oder UK 2 033 509 A bekannt. Gemeinsam ist ihnen eine Unterteilung in einen die beiden Reibflächen für die Anlage der Bremsbeläge aufweisenden Bremsring einerseits, und einen Bremsscheibentopf andererseits. Der Bremsscheibentopf besteht aus einem sich axial erstreckenden Abschnitt und einem radialen Flansch, in dem sich Öffnungen zum Verschrauben der Bremsscheibe mit der Radnabe des Fahrzeuges befinden. Während der Bremsring massiv und z. B. aus Grauguss gefertigt ist, handelt es sich bei dem Bremsscheibentopf um ein im Vergleich relativ dünnwandiges Bauteil. Gleichwohl gelangt ein Teil der beim Bremsen erzeugten Wärme über den Bremsscheibentopf in die Radnabe, und führt dort zu einer vor allem für die Lagerung der Radnabe unerwünschten Aufheizung.

Aus der UK 1,027,686 ist eine Bremsscheibe bekannt, deren Bremsring über einzelne Speichen mit der Radnabe des Fahrzeuges verbunden ist. Im Bereich der Verbindung mit der Radnabe ergänzen sich die Speichen zu einer Unterbrechungen aufweisenden und im übrigen ebenen Ringscheibe, die mit ihrer gesamten Flachseite an der Radnabe anliegt. Jede Speiche besteht aus einem in den Bremsring eingegossenen Abschnitt, einem sich axial erstreckenden Abschnitt sowie einem radial nach innen gerichteten Abschnitt. Der radial nach innen gerichtete Abschnitt ist auf einem Teil seiner Länge mit einer Versteifungssicke versehen, und er weist nahe seines flachen inneren Endes jeweils eine Öffnung für die Verschraubung mit der Radnabe auf. Auch bei dieser Bremsscheibe fließt bei stark erhitzter Bremsscheibe ein großer Wärmestrom über die Speichen in die Radnabe hinein.

Mit der Erfindung wird daher eine Verringerung der durch Wärmeleitung hervorgerufenen Erwärmung der Radnabe angestrebt.

Zur **Lösung** wird bei einer Bremsscheibe für eine Fahrzeug-Scheibenbremse mit den eingangs angegebenen Merkmalen vorgeschlagen, dass der Flansch in Umfangsrichtung segmentiert ist, wobei sich erste Segmentbereiche mit zweiten Segmentbereichen abwechseln, die Materialdicken in beiden Segmentbereichen im Wesentlichen dieselben sind, und die zweiten Segmentbereiche axial zurückversetzt gegenüber der Ebene der die Öffnungen aufweisenden ersten Segmentbereiche liegen.

Durch die Segmentierung im Bereich des Kontaktes zur Radnabe, bei der einzelne Segmente in einer zurückversetzt angeordneten Ebene liegen, reduziert sich die für die Wärmeleitung maßgebliche Kontaktfläche zwischen Bremsscheibentopf und Radnabe, und damit die Wärmeübertragung. Von Vorteil ist ferner die durch die Segmentierung und den damit erzielten Axialversatz der aufeinander folgenden Segmente erzielte Versteifung des Bremsscheibentopfes im Bereich seiner Verbindung mit der Radnabe. Die Wirkung ist vergleichbar der von Versteifungssicken. Für eine Kostengünstige Herstellung des Bremsscheibentopfes ist es von Vorteil, diesen als Tiefziehteil auszubilden.

Die Gestaltung der Segmentierung des Flansches ist derart, dass sich im montierten Zustand die ersten Segmentbereiche flächig direkt an der Radnabe abstützen. Durch diese Segmente führen auch die Befestigungsbolzen. Die zweiten Segmentbereiche hingegen liegen nicht flächig gegen die Radnabe an, da sie axial zurückversetzt sind, d.h. im Vergleich zur Ebene der ersten Segmentbereiche entweder parallel zurückspringend oder zurückgeneigt angeordnet sind. Die Herstellung der Segmentierung durch solcherart abwechselnd vor- und zurückspringende Segmentbereiche erfolgt vorzugsweise in einem Prägeverfahren zwischen zwei Prägestempeln.

Vorzugsweise sind die Übergänge zwischen den ersten und zweiten Segmentbereichen jeweils als Stufen ausgebildet. Die Höhe dieser Stufen kann, sofern die zweiten Segmentbereiche rampenförmig geneigt angeordnet sind, zur Mittelachse der Bremsscheibe hin zunehmen.

Herstellungstechnisch ist es von Vorteil, wenn der Axialversatz der Segmentbereiche geringer ist, als die Materialdicke in den Segmentbereichen.

Mit weiteren Ausgestaltungen der Bremsscheibe wird vorgeschlagen, durch eine entsprechende Gestaltung der ersten Segmentbereiche zugleich eine Drehsicherung für einen Bremsscheibe und Radnabe miteinander verbindenden Bolzen zu realisieren. Der Bolzen ist vorzugsweise mit einem unrunden Bolzenkopf versehen. Dessen unrunder Bereich kann sich z.B. gegen eine Stufe oder eine andere Verformungsstruktur des Flansches abstützen, wodurch der Bolzen auf besonders einfache Weise gegen ein Verdrehen gesichert ist.

Mit einer weiteren Ausgestaltung wird vorgeschlagen, dass die der Radnabe zugewandten Seiten der zweiten Segmentbereiche radial offene Kanäle zwischen Bremsscheibentopf und Radnabe begrenzen. Über diese Kanäle kann innerhalb des Bremsscheibentopfes angesammelte Flüssigkeit abfließen, mit der Folge einer verminderten Korrosion durch Feuchtigkeit.

Ausführungsbeispiele der Erfindung werden im Folgenden anhand der zugehörigen Zeichnungen beschrieben. Darin zeigen:
- Fig. 1: in einer Schnittdarstellung eine in Verbundbauweise hergestellte Bremsscheibe einschließlich eines angeschweißten Bremsscheibentopfes;
- Fig. 2: den unteren Teil der Bremsscheibe nach Fig. 1 in einer vergrößerten Darstellung;
- Fig. 3: einen Schnitt entlang der in Fig. 2 bezeichneten Schnittebene III-III
- Fig. 4: die Bremsscheibe einschließlich des Bremsscheibentopfes in einer perspektivischen Darstellung;
- Fig. 5: in gleicher Perspektive wie bei Fig. 4 die Bremsscheibe mit einem idealisierten Schnitt entlang Ihres zentralen Lüftspalts;
- Fig. 6: in einer der Fig. 5 entsprechenden Perspektive wiederum den idealisierten Schnitt in der Ebene des zentralen Lüftspalts, jedoch im Vergleich zu Fig. 5 unter Weglassen des in dem Lüftspalt eingeordneten Bremsringträgers;
- Fig. 7: eine der Fig. 2 entsprechende Darstellung mit zusätzlicher Wiedergabe eines Flansches der Fahrzeug-Radnabe;
- Fig. 8: in einer Schnittdarstellung eine in Verbundbauweise hergestellte Bremsscheibe, über Schraubbolzen montiert an einer Radnabe; Die Radnabe ist anders als in Fig. 7 gestaltet; Zusätzlich angedeutet sind Bauteile der Scheibenbremse;
- Fig. 9: eine zweite Ausführungsform einer in Verbundbauweise hergestellten Bremsscheibe einschließlich eines daran befestigten Bremsscheibentopfes;
- Fig. 10: die Bremsscheibe nach Fig. 9 in einer perspektivischen Darstellung;
- Fig. 11: einen Teilschnitt durch den Flansch des Bremsscheibentopfes entsprechend der Schnittebene XI - XI in Fig. 10;
- Fig. 12: einen Teilschnitt durch den Flansch des Bremsscheibentopfes entsprechend der Schnittebene XII - XII in Fig. 10;
- Fig. 13: die Bremsscheibe nach den Fign. 9 bis 12, über Schraubbolzen montiert an einer Radnabe.

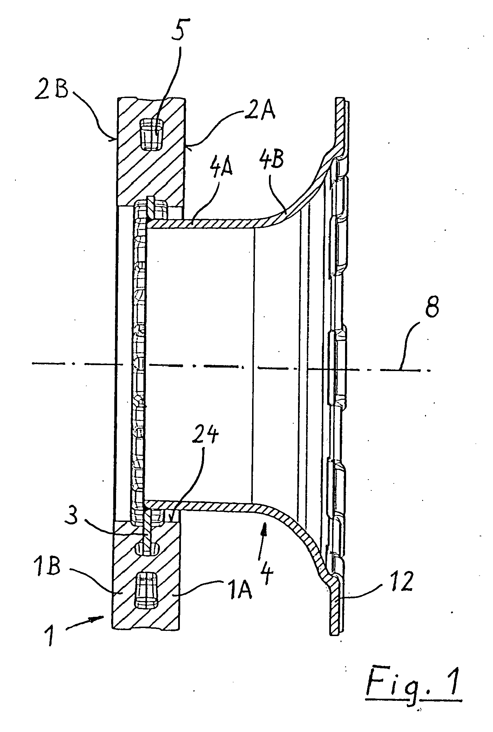

Die in den Fign. 1 bis 4 in ihrer Gesamtheit wiedergegebene Bremsscheibe in Verbundbauweise setzt sich aus insgesamt drei Teilen zusammen, nämlich dem eigentlichen Bremsring 1 mit den außen angeordneten Reibflächen 2A, 2B für die Bremspads der Scheibenbremse, ferner einem in den Bremsring gießtechnisch eingebetteten Bremsringträger 3, sowie einem Bremsscheibentopf 4. Die Bremsscheibe ist vom innen belüfteten Bautyp, d. h. der Bremsring 1 weist einen zentralen Lüftspalt 5 aus vielen Lüftungskanälen 6, 7 auf. Die Lüftungskanäle 6, 7 verlaufen im Wesentlichen radial in Bezug auf die Mittelachse 8 der Bremsscheibe, sie können jedoch auch leicht bogenförmig verlaufen, wie zum Beispiel in der DE 102 41 655 A1 beschrieben.

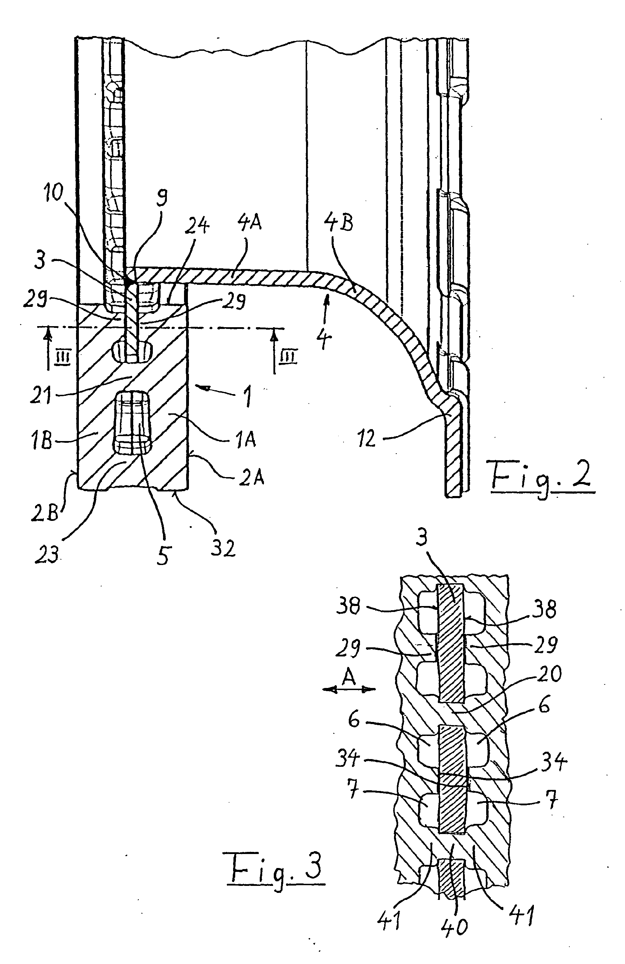

Der Bremsring 1 besteht aus Stahlguss. Darin gießtechnisch teilweise eingebettet ist der Bremsringträger 3, welcher eine flache Ringscheibe aus zum Beispiel gestanztem Stahlblech mit einer Dicke von 4 - 8 mm ist. Der Außendurchmesser des Bremsringträgers 3 ist deutlich geringer als der des Bremsrings 1. Nur im Bereich nahe am Innenrand 24 des Bremsrings 1 schließt dieser den kleineren Bremsringträger 3 ein. Der Innenrand 9 des Bremsringträgers 3 ist kreisrund und zur Verbindung mit dem in diesem Bereich zylindrischen Bremsscheibentopf 4 als Schweißkante ausgebildet. In Fig. 2 ist die Schweißnaht mit dem Bezugszeichen 10 versehen.

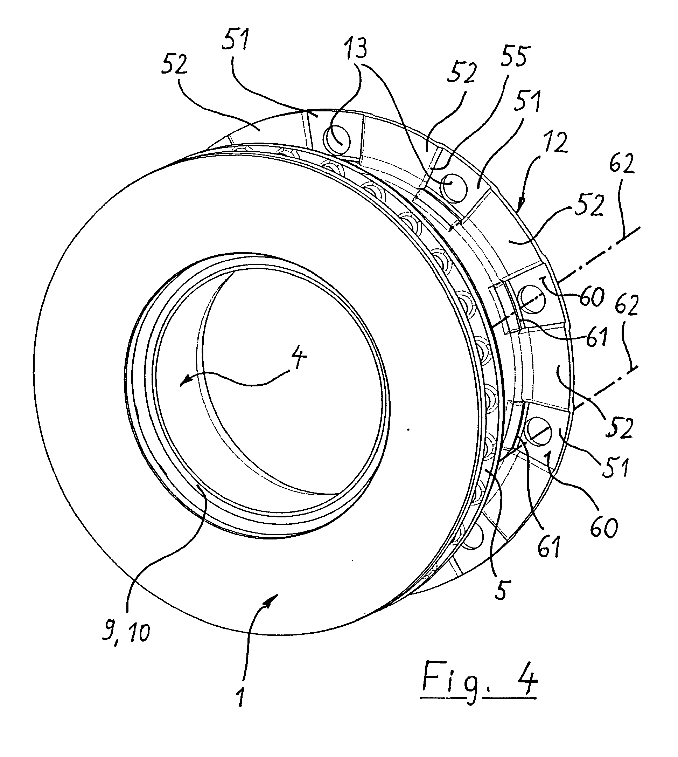

Der aus tiefgezogenem Stahlblech bestehende Bremsscheibentopf 4 weist einen sich axial erstreckenden zylindrischen Abschnitt 4A, einen sich erweiternden Abschnitt 4B und einen radial nach außen gerichteten Flansch 12 auf. Der Flansch 12 ist über seinen Umfang verteilt mit Öffnungen 13 (Fig. 4) versehen, durch welche Schraubbolzen hindurchführbar sind, um so die Bremsscheibe an der Nabe des Fahrzeuges zu befestigen.

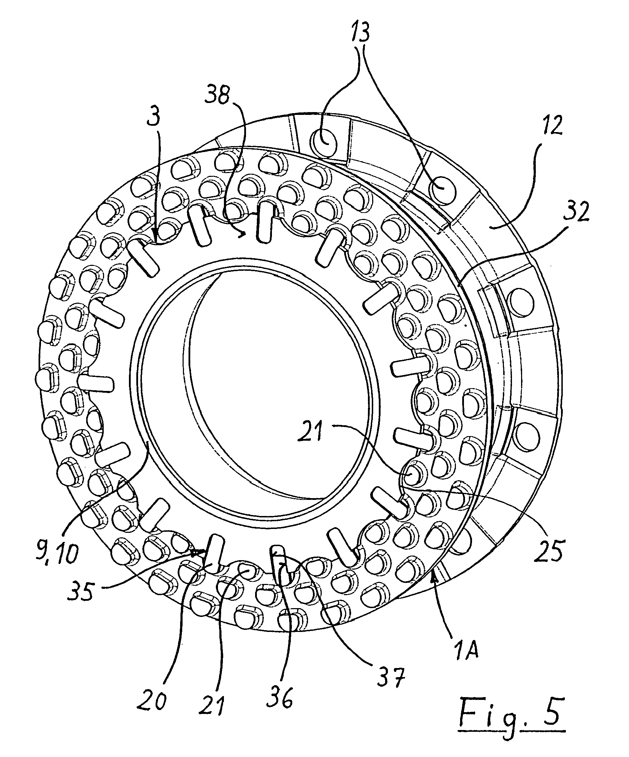

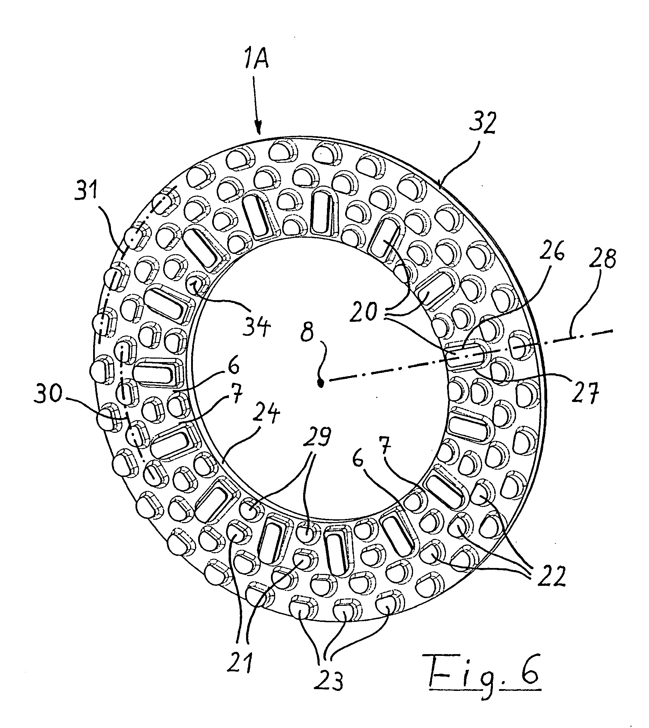

Die beiden Hälften 1A, 1B des gegossenen Bremsrings 1 stehen materialmäßig über eine Vielzahl von Gussstegen in Verbindung, zwischen denen die Strömungskanäle verlaufen. Die Fign. 5 und 6 zeigen den aus Gründen der Anschauung in der Ebene des Lüftspalts aufgeschnittenen Bremsring 1, d. h. eine Hälfte 1A des Bremsrings. Zu erkennen sind Gussstege 20, 21, 22 und 23, welche sich ausnahmslos durchgehend von der einen Hälfte 1A zu der anderen Hälfte 1B des Bremsrings erstrecken. Die Stege 20 befinden sich nahe am Innenrand 24 des Bremsrings. Sie sind in Radialrichtung des Bremsrings entlang ihrer Mittellinie 28 länglich geformt, ihre beiden Längsseiten 26, 27 verlaufen parallel zueinander. Es folgen in Umfangsrichtung nicht zwei der Stege 20 unmittelbar aufeinander, sondern sie wechseln sich mit jeweils einem Steg 21 und einem Vorsprung 29 ab. Während sich die Vorsprünge 29 sehr nah am Innenrand 24 befinden, befinden sich die einzelnen Stege 21 etwas weiter außen und etwa so weit außen, wie sich die länglichen Stege 20 radial nach außen erstrecken.

Auf einem nochmals größeren Durchmesser 30 befinden sich die Stege 22, und auf dem größten Durchmesser 31, welcher bereits nahe am Außenrand 32 des Bremsrings liegt, befinden sich die Stege 23. Die Stege 20 bis 23 sind zueinander auf Lücke angeordnet, d. h. jeder Steg auf dem jeweils größeren Durchmesser ist in der Lücke zu den Stegen auf dem jeweils kleineren Durchmesser angeordnet.

Bei den Vorsprüngen 29, welche sich nahe am Innenrand 24 jeweils zwischen den länglichen Stegen 20 befinden, handelt es sich nicht um zwischen den Bremsringhälften durchgehende Stege, sondern um kurze Näpfe, die sich in den Lüftspalt 5 erstrecken, und in einer flachen Stirnfläche 34 enden.

Auch Fig. 5 zeigt die in der Ebene des Lüftspalts aufgeschnittene Bremsscheibe, hier jedoch mit dem darin angeordneten, flachen Bremsringträger 3. Zu erkennen ist, wie sich der Bremsringträger 3 infolge seiner unrunden Außenkontur in die gegossene Gestaltung des Bremsrings einfügt. Der Bremsringträger 3 ist außen mit Ausnehmungen 35 versehen, die als nach außen offene Schlitze mit zueinander parallelen Rändern 36, 37 gestaltet sind. Mit diesen parallelen Rändern 36, 37 liegen die Ausnehmungen 35 an den entsprechenden Längsseiten 26, 27 der länglichen Stege 20 an. Die Mittellinie 28 zwischen den beiden Längsseiten 26, 27 ist hierbei exakt auf die Mittelachse 8 der Bremsscheibe ausgerichtet.

In Fig. 5 verborgen sind die Vorsprünge 29 der Bremsringhälfte 1A. Denn diese Vorsprünge 29 werden durch den Bremsringträger 3 verdeckt, gegen dessen Flachseite sie mit ihren flachen Stirnflächen 34 anliegen. Diese Zusammenhänge werden nachfolgend anhand der Fign. 2 und 3 näher erläutert:

Der auf dem Teilkreisdurchmesser der Vorsprünge 29 angelegte Schnitt Fig. 3 zeigt abwechselnd die durch die Ausnehmungen 35 des Bremsringträgers 3 hindurchgehenden länglichen Stege 20 und die von beiden Seiten her in Richtung auf den Bremsringträger 3 vorstehenden Vorsprünge 29. Wie bereits beschrieben, sind diese napfartig gestaltet, und sie liegen mit ihren ebenen Stirnflächen 34 gegen die jeweilige Flachseite 38 des Bremsringträgers 3 an.

Des weiteren lässt die Schnittdarstellung Fig. 3 erkennen, dass die länglichen Stege 20, in Richtung ihrer Axialerstreckung A betrachtet, jeweils eine Engstelle 40 und davor und dahinter erweiterte Abschnitte 41 aufweisen. Die Engstelle 40 ist hierbei die Hindurchführung durch die Ausnehmung 35 des Bremsringträgers 3, wohingegen die erweiterten Abschnitte 41 teilweise gegen die jeweilige Flachseite 38 des Bremsringträgers 3 anliegen. Auf diese Weise wird eine sehr gute axiale Fixierung des Bremsringträgers 3 beim Umgießen mit dem Gussmaterial des Bremsrings erreicht. Durch die Parallelgestaltung der Längsseiten 26, 27 und der Längsränder 36, 37 können temperaturbedingte unterschiedliche Ausdehnungen von Bremsring 1 und Bremsringträger 3 ausgeglichen werden. Zur Fixierung in Axialrichtung A tragen ferner die von beiden Seiten her an den Flachseiten 38 des Bremsringträgers 3 anliegenden Vorsprünge 29 bei.

Die Herstellung der Bremsscheibe mit Ausnahme des Topfes 4 erfolgt im Verbundguss. Hierzu wird der als Blechstanzteil vorgefertigte Bremsringträger 3 in der Gießform fixiert, bevor Stahlguss in die Gießform eingefüllt wird und entsprechend dem vorgeformten Gießkern den Bremsring 1 einschließlich aller Stege 20 bis 23 und der Vorsprünge 29 formt. Nachdem der Guss ausgehärtet ist, stellt sich die in Fig. 3 dargestellte Verbindung der Teile ein, bei der der Bremsringträger 3 ausschließlich entlang des inneren Umfangsbereichs des Bremsrings 1 in diesem fixiert ist.

Der aus tiefgezogenem Stahlblech bestehende Bremsscheibentopf 4 weist an seinem radial nach außen gerichteten Flansch 12 eine in Umfangsrichtung gegliederte Segmentierung auf. Hierbei wechseln sich erste Segmentbereiche 51, welche alle in einer Ebene E1 liegen, mit zweiten Segmentbereichen 52 ab, die parallel zurückspringend zur Ebene E1 angeordnet sind. Die Ebene E2 der zweiten Segmentbereiche 52 ist um etwa die halbe Blechdicke axial zurückversetzt gegenüber der Ebene E1 der ersten Segmentbereiche 51. Die Ebenen E1 und E2 liegen hier parallel zueinander und erstrecken sich beide rechtwinklig zur Bremsscheibendrehachse.

Die Materialdicke D ist in beiden Segmentbereichen 51, 52 die gleiche, da die Herstellung der Segmentierung des Flansches 12 in einem Prägeverfahren zwischen zwei zueinanderfahrenden Prägematritzen erfolgt. Zur Versteifung des Bremsscheibentopfes in dem besonders belasteten Flanschbereich ist der Bremsscheibentopf 4 mit einer umlaufenden Verkröpfung 53 im Bereich des Übergangs zwischen dem sich erweiternden Abschnitt 4B und dem Flansch 12 versehen. Die Formung der Verkröpfung 53 erfolgt entweder beim Tiefziehen des Bremsscheibentopfes selbst, oder aber gemeinsam mit der Prägung des Flansches 12 in einander abwechselnde Segmentbereiche.

Die Übergänge zwischen den ersten 51 und den zweiten 52 Segmentbereichen sind jeweils als Stufen 55 ausgebildet. Diese Stufen 55 erstrecken sich radial in Richtung auf die Mittelachse 8 der Bremsscheibe.

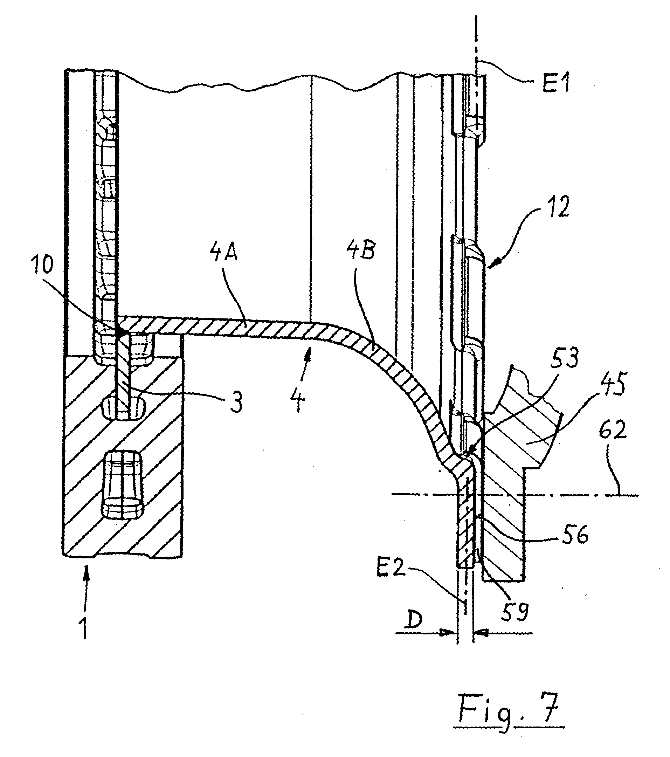

Insbesondere Fig. 7 lässt erkennen, dass der in Axialrichtung bestehende Versatz der beiden Ebenen E1 und E2 geringer ist, als die Materialdicke des Flansches in den Segmentbereichen. Die der Radnabe 45 bzw. deren Radnabenflansch zugewandten Flächen 56 der zweiten Segmentbereiche 52 begrenzen, wie ebenfalls Fig. 7 erkennen lässt, radial offene, flache Kanäle 59 zwischen Bremsscheibentopf 4 und Radnabe 45. Durch diese Flachkanäle kann Wasser, welches sich innen an dem Bremsscheibentopf angesammelt hat, nach unten abfließen, wodurch die Korrosionsneigung im Bereich der Verbindung der Bremsscheibe mit der Radnabe verringert wird. Vor allem aber führt das Nichtanliegen der Außenflächen 56 der zweiten Segmentbereiche 52 an der Radnabe 54 zu einer insgesamt reduzierten Kontaktfläche zwischen Bremsscheibe bzw. Bremsscheibentopf 4 und der Radnabe 45, so dass weniger Wärme durch Wärmeleitung zu der Radnabe fließt. Denn in der Radnabe befinden sich die wesentlichen Elemente der gegenüber Temperaturbelastungen empfindlichen Radlagerung.

Die Außenflächen der ersten Segmentbereiche 51, in denen sich die Öffnungen 13 befinden, sind vollkommen flach gestaltet, so dass sich in diesen Bereichen ein guter Kontakt zu der ebenfalls flachen Gegenfläche der Radnabe 45 ergibt, und sich beim Anziehen der durch die Öffnungen 13 hindurchgeführten Verschraubung eine gleichmäßige Flächenpressung einstellt.

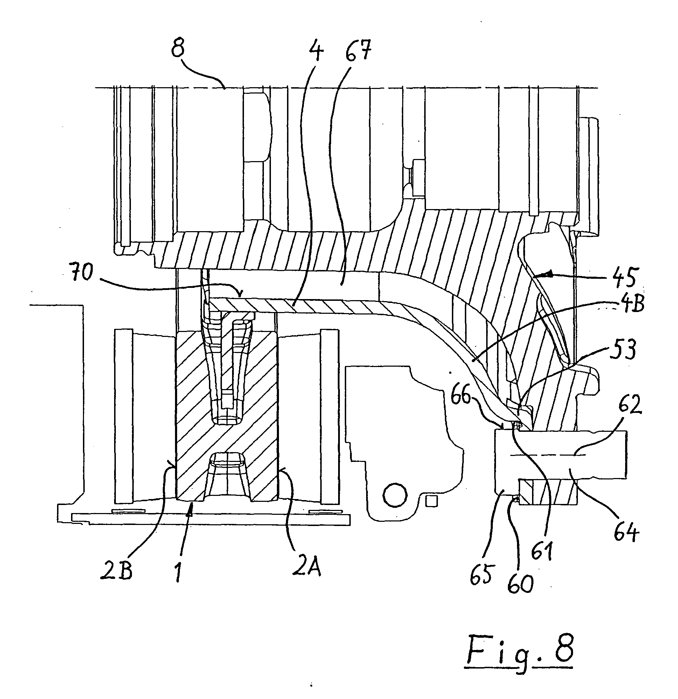

Für diese Verschraubung ist, wie nachfolgend anhand Fig. 8 erläutert wird, eine Drehsicherung der verwendeten Schraubelemente, z.B. Schraubbolzen 64, sinnvoll. Zu diesem Zweck reichen die dem Bremsring 1 zugewandten Flachseiten 60 der ersten Segmentbereiche 51 nach radial innen bis an eine Stufe 61 heran. Die Stufe 61 ist Ergebnis der Verkröpfung 53 und erstreckt sich tangential in Bezug auf die Mittelachse 62 der Öffnung 13. An der Stufe 61 kann sich der für die Verbindung der Bremsscheibe mit der Radnabe 45 verwendete Bolzen 64 mit einer entsprechend gestalteten Außenkontur seines Bolzenkopfes 65 verdrehsicher abstützen. Hierzu ist der Bolzenkopf 65, bezogen auf die Mittelachse 62, unrund gestaltet. Sein unrunder Bereich 66 liegt der Stufe 61 gegenüber oder stützt sich unmittelbar gegen die Stufe 61 ab. Ein Belüftungsringkanal 67 befindet sich zwischen der Innenseite 70 des Bremsscheibentopfes 4 und der Radnabe 45. Da der Belüftungsringkanal 67 über die Kanäle 59 zur Umgebung hin offen ist, wird die Innenseite 70 und die Radnabe 45 durch die Luft in dem Belüftungsringkanal gekühlt, wodurch die Temperaturbelastung der Radnabe 45 zusätzlich reduziert wird.

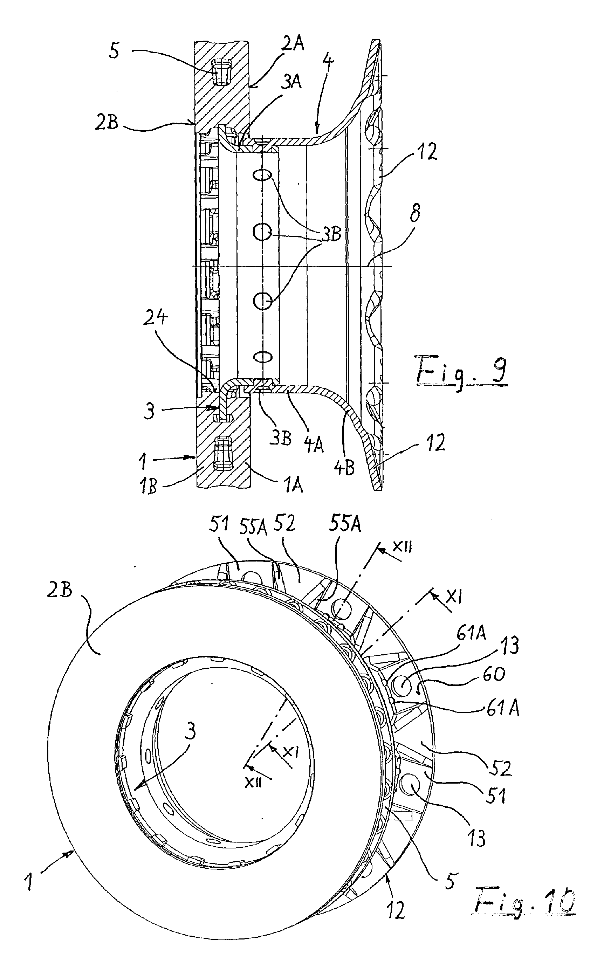

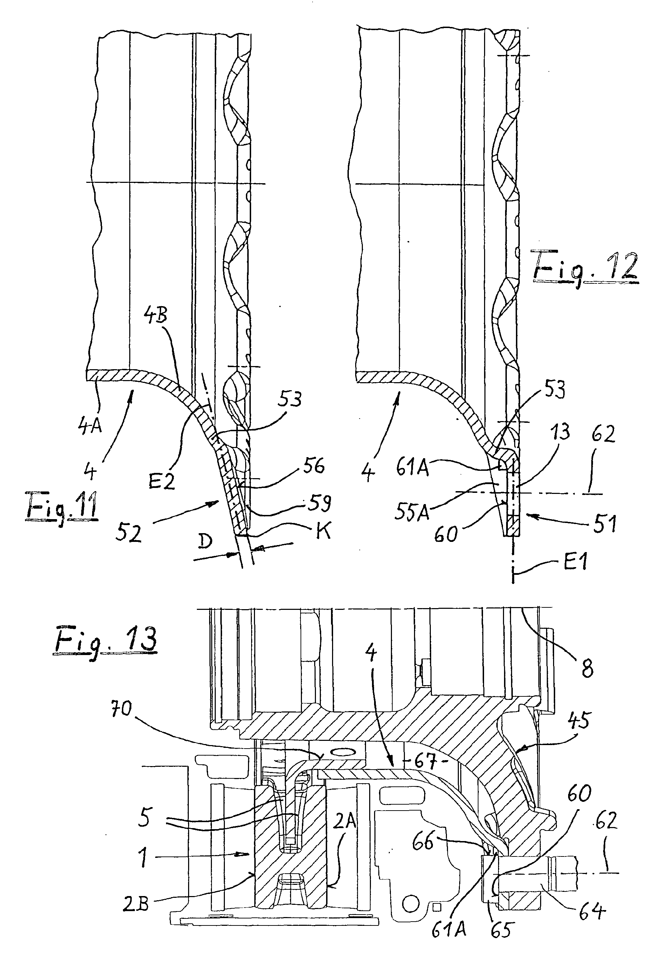

Bei der Ausführungsform nach den Figuren 9 bis 13 ist der Bremsringträger 3 nicht als flache Ringscheibe gestaltet, sondern als tiefgezogener Winkelring unter Ausbildung eines zylindrischen Abschnitt 3A zu dem Flansch 12 hin. An den Verbindungsorten 3B ist der Bremsringträger 3 mit dem Bremsscheibentopf 4 verbunden. Bei den Verbindungsorten 3B kann es sich z.B. um einzelne Formschlusselemente und/oder um gleichmäßig über den Umfang verteilte Schweißpunkte handeln. Figur 9 lässt erkennen, dass bei der Verbindung des Bremsringträgers 3 mit dem Bremsscheibentopf 4 der zylindrische Abschnitt 3A des Bremsringträgers 3 innen, und der zylindrische Abschnitt 4A des Bremsscheibentopfes 4 außen liegt. Sowohl Bremsringträger 3 als auch der Bremsscheibentopf 4 bestehen aus gestanztem und kaltverformtern Stahlblech mit einer Dicke von 4 bis 8 mm.

Auch der in den Figuren 9 bis 13 dargestellte Bremsscheibentopf weist an seinem nach außen gerichteten Flansch die Segmentierung auf. Abweichend von dem Ausführungsbeispiel nach den Figuren 1 bis 8 ist jedoch die Gestaltung der zurückversetzten zweiten Segmentbereiche 52. Diese sind hier geneigt bzw. rampenförmig gestaltet, wohingegen die ersten Segmentbereiche 51, mit denen der Flansch 12 flächig an der hier nicht dargestellten Radnabe des Fahrzeugs anliegt, rechtwinklig zur Bremsscheibendrehachse angeordnet sind.

Die Figuren 11 und 12 zeigen einmal einen Schnitt durch den Flanschbereich in einem der zweiten Segmentbereiche 52 (Fig. 11), und zum anderen einen entsprechenden Schnitt durch einen ersten Segmentbereich 51 (Fig. 12). Zu erkennen ist die, in Bezug auf die Anlageebene an der Radnabe, rampenförmige Neigung der zweiten Segmentbereiche 52, welche in der angewinkelten Ebene E2 liegen. Der Vergleich der Figuren 11 und 12 zeigt, dass die Segmentbereiche 52 im Vergleich zu jener Ebene E1, in der die Segmentbereiche 51 liegen, etwas axial zurückversetzt und zusätzlich auch angewinkelt angeordnet sind.

Obgleich sich die zweiten Segmentbereiche 52 infolge ihrer angewinkelten Anordnung nach außen hin zunehmend an die hier nicht dargestellte Befestigungsfläche der Radnabe annähern, verbleibt selbst im Bereich der Außenkante K der Segmentbereiche 52 noch ein gewisser Abstand zur gegenüberliegenden Anlagefläche der Radnabe. Auf diese Weise befindet sich auch bei dieser Ausführungsform ein nach außen offener Kanal 59 zwischen jedem zweiten Segmentbereich 52 des Bremsscheibentopfes und der gegenüberliegenden Radnabe. Durch den nach außen hin flacher werdenden Kanal 59 kann Wasser, welches sich innen an dem Bremsscheibentopf angesammelt hat, nach unten abfließen, so dass die Korrosionsneigung im Bereich der Verbindung der Bremsscheibe und der Radnabe verringert wird.

Vor allem aber führt das Nichtanliegen der geneigten Außenflächen 56 der zweiten Segmentbereiche 52 an der Radnabe zu einer insgesamt stark reduzierten Kontaktfläche zwischen Bremsscheibe bzw. Bremsscheibentopf 4 und der Radnabe, so dass weniger Wärme durch Wärmeleitung zu der Radnabe fließt.

Bei der hier beschriebenen Ausführungsform sind die Übergänge zwischen den ersten 51 und den zweiten 52 Segmentbereichen wiederum als Stufen 55A gestaltet. Wegen der geneigten Anordnung der zweiten Segmentbereiche 52 wird die Höhe dieser Stufen 55A nach außen hin geringer. Die Stufen 55A erstrecken sich auch nicht radial zur Mittelachse der Bremsscheibe hin, sondern sie laufen aufeinander zu, wodurch die zweiten Segmentbereiche 52 in Ansicht eine in etwa trapezförmige Gestaltung zeigen.

Auch bei dieser zweiten Ausführungsform sind Maßnahmen getroffen, um ein Verdrehen der zur Befestigung der Bremsscheibe verwendeten Schraubbolzen zu verhindern. Die Figuren 10, 12 und 13 lassen erkennen, dass am innenliegenden Rand der flachen, ersten Segmentbereiche 51 Vorsprünge 61A angeordnet sind. Deren Herstellung erfolgt vorzugsweise ebenfalls während der Kaltverformung des Bremsscheibentopfes 4. An den zwei Vorsprüngen 61A kann sich der für die Verbindung der Bremsscheibe mit der Radnabe verwendete Bolzen 64 mit der entsprechend gestalteten Außenkontur seines Bolzenkopfes 65 verdrehsicher abstützten. Der unrunde Bereich 66 des Bolzenkopfes befindet sich in solcher Nähe zu den Vorsprüngen 61A, dass ein Verdrehen des Bolzens 64 dann ausgeschlossen ist, wenn sich der Bolzenkopf 65 an der Flachseite 60 abstützt.

### Bezugszeichen

- 1: Bremsring
- 1A: Hälfte
- 1B: Hälfte
- 2A: Reibfläche
- 2B: Reibfläche
- 3: Bremsringträger
- 3A: zylindrischer Abschnitt
- 3B: Verbindungsort
- 4: Bremsscheibentopf
- 4A: zylindrischer Abschnitt
- 4B: sich erweiternder Abschnitt
- 5: Lüftspalt
- 6: Lüftungskanal
- 7: Lüftungskanal
- 8: Mittelachse
- 9: Innenrand
- 10: Schweißnaht
- 12: Flansch
- 13: Öffnung
- 20: Steg
- 21: Steg
- 22: Steg
- 23: Steg
- 24: Innenrand
- 26: Längsseite
- 27: Längsseite
- 28: Mittellinie
- 29: Vorsprung
- 30: Durchmesser
- 31: Durchmesser
- 32: Außenrand
- 34: Stirnfläche
- 35: Ausnehmung
- 36: Längsrand
- 37: Längsrand
- 38: Flachseite
- 40: Engstelle
- 41: erweiterter Abschnitt
- 45: Radnabe, Flansch der Radnabe
- 51: erste Segmentbereiche
- 52: zweite Segmentbereiche
- 53: Verkröpfung
- 55: Stufe
- 55A: Stufe
- 56: Fläche
- 59: Kanal
- 60: Flachseite
- 61: Stufe
- 61A: Vorsprung
- 62: Mittelachse
- 64: Bolzen
- 65: Bolzenkopf
- 66: unrunder Bereich
- 67: Belüftungsringkanal
- 70: Innenseite

- A: Axialerstreckung
- E1: Ebene
- E2: Ebene
- D: Materialdicke
- K: Außenkante

## Patentansprüche

1. Bremsscheibe für eine Fahrzeug-Scheibenbremse mit einem zwei Reibflächen (2A, 2B) aufweisenden Bremsring (1) und einem den Bremsring (1) mit der Radnabe des Fahrzeuges verbindenden Bremsscheibentopf (4) bestehend zumindest aus einem sich axial erstreckenden Abschnitt (4A) und einem radialen Flansch (12), welcher mit Öffnungen (13) zum Hindurchführen von Verschraubungen mit der Radnabe versehen ist,
**dadurch gekennzeichnet,**
**dass** der Flansch (12) in Umfangsrichtung segmentiert ist, wobei sich erste Segmentbereiche (51) mit zweiten Segmentbereichen (52) abwechseln, die Materialdicken (D) in beiden Segmentbereichen (51, 52) im Wesentlichen dieselben sind, und die zweiten Segmentbereiche (52) axial zurückversetzt gegenüber der Ebene (E1) der die Öffnungen (13) aufweisenden ersten Segmentbereiche (51) liegen.

2. Bremsscheibe nach Anspruch 1, **dadurch gekennzeichnet, dass** der Bremsscheibentopf (4) ein Tiefziehteil ist.

3. Bremsscheibe nach Anspruch 1 oder Anspruch 2, **dadurch gekennzeichnet, dass** die Übergänge zwischen den ersten (51) und zweiten (52) Segmentbereichen jeweils als Stufen (55; 55A) ausgebildet sind.

4. Bremsscheibe nach Anspruch 3, **dadurch gekennzeichnet, dass** die Höhe der Stufen (55A) nach außen hin abnimmt

5. Bremsscheibe nach einem der vorangehenden Ansprüchen, **dadurch gekennzeichnet, dass** der Axialversatz der Segmentbereiche (51, 52) geringer ist, als die Materialdicke (D) in den Segmentbereichen.

6. Bremsscheibe nach einem der vorangehenden Ansprüche, **dadurch gekennzeichnet, dass** dem Bremsring (1) zugewandte Flachseiten (60) der ersten Segmentbereiche (51) bis an eine Stufe (61) reichen, und dass sich die Stufe (61) tangential in Bezug auf die Mittelachse (62) der in dem Segmentbereich (51) angeordneten Öffnung (13) erstreckt.

7. Bremsscheibe nach Anspruch 6, **dadurch gekennzeichnet, dass** durch die Öffnungen (13) jeweils ein Bolzen (64) mit unrundem Bolzenkopf (65) hindurchführt, und dass der unrunde Bereich (66) des Bolzenkopfes (65) der Stufe (61) gegenüber liegt.

8. Bremsscheibe nach einem der Ansprüche 1 bis 5, **dadurch gekennzeichnet, dass** die dem Bremsring (1) zugewandte Flachseiten (60) der ersten Segmentbereiche (51) bis an Vorsprünge (61A) reichen, und dass die Vorsprünge (61A) Verdrehsicherungen für einen sich auf der Flachseite (60) abstützenden Bolzenkopf (65) bilden.

9. Bremsscheibe nach einem der vorangehenden Ansprüche, **dadurch gekennzeichnet, dass** die der Radnabe zugewandten Seiten (56) der zweiten Segmentbereiche (52) radial offene Kanäle (59) zwischen Bremsscheibentopf (4) und Radnabe begrenzen.

10. Bremsscheibe nach einem der vorangehenden Ansprüche, **gekennzeichnet durch** eine den Bremsscheibentopf (4) verstärkende Verkröpfung (53) im Bereich des Übergangs zu dem Flansch (12).

11. Bremsscheibe nach einem der vorangehenden Ansprüche, **dadurch gekennzeichnet, dass** die ersten Segmentbereiche (51) jeweils gleich gestaltet sind, und dass auch die zweiten Segmentbereiche (52) jeweils gleich gestaltet sind.

12. Bremsscheibe nach einem der vorangehenden Ansprüche, **dadurch gekennzeichnet, dass** die zweiten Segmentbereiche (52) in Bezug auf die ersten Segmentbereiche (51) geneigt angeordnet sind.

13. Bremsscheibe nach einem der vorangehenden Ansprüche, **gekennzeichnet durch** einen nach außen offenen Kanal (59) zwischen dem jeweiligen zweiten Segmentbereich (52) und einer gegenüberliegenden Befestigungsfläche für die Bremsscheibe.
